# EUROPEAN PATENT APPLICATION

(11) **EP 2 819 369 A1**
(43) Date of publication of application: **31.12.2014**
(21) Application number: 13305911.3
(22) Date of filing: 28.06.2013
(51) Int. Cl.: H04L 29/06

(54) **Method of providing a device with a data through a streaming flow**

(71) Applicant: Gemalto SA, 92190 Meudon (FR)
(72) Inventor: Praden, Anne-Marie, 13122 VENTABREN (FR)

(57) **Abstract**

The invention is a method which manages an association of ranges of bit rates to quality levels which are allocated to different categories of subscriptions. A streaming client has a specific means which guarantees that only authorized bit rates are used by the streaming client. The behavior of a streaming client is restricted to the range of bit rates mapped to its allocated quality level.

## Description

### (Field of the invention)

The present invention relates to methods of providing a device with a data through a streaming flow. It relates particularly to methods of providing data through an adaptive streaming flow.

### (Prior art)

Streaming technology allows a server to deliver a media to a client player so that the client player can begin playing the media (i.e. music or video) before the entire media has been received. Adaptive bit rate streaming is an enhanced technique based on the streaming model. The source content is encoded at multiple bit rates then each of the different bit rate streams is segmented into small segments. The streaming client is made aware of the available bit rates by receiving a manifest file. By taking into account the available resources in real time at client side, the client selects the appropriate bit rate. The client recovers the initial file by consecutive requests to the streaming server. When playing a single media, the client can switch between different bit rates depending on its available CPU resources, the size of its display screen and on the actual bandwidth.

Web streaming is becoming a leading streaming technology fostered by the mains actors in this domain. Content delivery networks (CDN) consist in a network of cache servers spread over the edge of Internet. The role of these servers is to cache frequently accessed and/or big content in places closer to the clients accessing it in order to improve Quality of Service (QoS). The CDN framework allows a short lead-time for requests. The initial server redirects requests to the optimal cache servers. In the case of web streaming over a CDN, the consecutive files are cached possibly over several edge servers.

All the streaming clients are configured to use the best level of quality when getting the streaming flow.

Dynamic adaptive bit rate streaming is well-suited for delivering data over HTTP networks, like The Internet. Several adaptive bit rate streaming technologies have been deployed, like HTTP Live streaming™ (HLS), Smooth Streaming™, or Dynamic Adaptive Streaming over HTTP™ (DASH). But these technologies may be used as well over some broadcast networks. An example of such use is defined in 3GPP (3rd Generation Partnership Project) for MBMS (Multimedia Broadcast Multicast Service).

Dynamic adaptive streaming increases the efficiency of the CDN, as the server delivering the content may broadcast the content at different rates and the corresponding manifest file to the CDN regardless of the client requests, and terminals are able to request the content to the local CDN at the relevant bit rate according to the available bandwidth and with the relevant feature (display size for example) according to their capability.

The streaming server may encounter congestion issues which can lead to decrease the quality of the received streaming media for all clients.

Service providers may propose some business cases, where the user is able to subscribe to a service with a guarantee of a minimum level of quality of service in return of a higher price. For such subset of clients which have enrolled at this specific subscription allowing getting TV and "Video On Demand" over IP network with a high level of quality, there is a requirement to get a high level of quality of received streaming media.

A solution to resolve the case of premium users that have subscribed for a higher quality may be managed directly at the server side. The terminal may request a content and the server will deliver the content with the appropriate quality corresponding to its subscription. But this solution bypasses totally the adaptive streaming and the CDN and then finally reduces the efficiency of the CDN.

### (Summary of the Invention)

An object of the invention is to solve the above mentioned technical problem.

The object of the present invention is a method for providing a device with a data through an adaptive streaming flow. The data is made available by a server entity in a plurality of bit rates. The device comprises a subscription allowing access to said data. The method comprises the following steps:
- sending a quality level from a subscription server to the device through a message related to the subscription,
- providing the device with a range of bit rates reserved for said quality level, the range being a subset of said plurality of bit rates, and
- authorizing the device to use a selection of bit rates which is comprised only in the range for receiving the data.

Advantageously, the server entity may allocate the range to the quality level.

Advantageously, an updated range of bit rates may be dynamically generated by taking into account the load of the server entity and the updated range may be allocated to the quality level and sent to the device.

Advantageously, the subscription server may manage a plurality of quality levels and the device may receive a manifest file comprising the plurality of quality levels. The plurality of ranges may be uniquely allocated to a each of said quality levels.

Advantageously, the device may generate a report reflecting the selection of bit rates and the report may be sent to a monitoring server as a proof of effective quality of the adaptive streaming flow.

Advantageously, the device may comprise an user equipment and a secure element. The subscription may be allocated to a user. The secure element may generate a signature of the report using a cryptographic function and an identifier of said user. The signature may be sent to the monitoring server.

Another object of the invention is a device intended to receive a data through an adaptive streaming flow. The data is provided by a server entity in a plurality of bit rates. The device comprises a subscription allowing access to the data. The device is configured to receive and to store a quality level provided by a subscription server through a message related to the subscription. The device is configured to receive and to store a range of bit rates reserved for the quality level. The bit rate range is a subset of the plurality of bit rates. The device comprises a control means configured to use only a selection of bit rates comprised in the range to receive the data.

Advantageously, the device may comprise a reporting means configured to generate a report reflecting said selection of bit rates, the report being a proof of effective quality of the adaptive streaming flow.

Another object of the invention is system comprising the above-described device and a monitoring server which is configured to retrieve, to authenticate and to analyze the report. The subscription is allocated to a user, the reporting means is adapted to generate a signature of the report using a cryptographic function and an identifier of the user. The reporting means is able to securely send the report to the monitoring server.

Advantageously, the server entity may be configured to dynamically generate an updated range of bit rates by taking into account the load of the streaming entity. The server entity may be configured to allocate the updated range to the quality level and to send the updated range to the device).

### (Brief description of the drawings)

Other characteristics and advantages of the present invention will emerge more clearly from a reading of the following description of a number of preferred embodiments of the invention with reference to the corresponding accompanying drawings in which:
- Figure 1 is a first example of a system comprising a server entity, a subscription server and a client device according to the invention;
- Figure 2 is a second example of a system comprising a server entity, a subscription server, a monitoring server and a client device according to the invention;
- Figure 3 is a third example of a system comprising a plurality of client devices and a server entity including a cache server according to the invention; and
- Figure 4 depicts an example of mapping between quality level and range of bit rates according to the invention.

### (Detailed description of the preferred embodiments)

The invention may apply to any types of adaptive streaming system. Even if the invention will be described for the DASH technology, the invention is not limited to the DASH model and applies to other types of adaptive streaming model.

The invention may apply to any types of data exchanged between the streaming server and the streaming client through a network like Internet provided that this data may be encoded using several bit rates. The invention is well-suited for the TV streaming over the Internet. The client device may be a TV, a set-top box, a mobile phone, Tablet PC or any device intended to receive a streaming flow through a communication network.

The invention relies on the association of ranges of bit rates to quality levels which are allocated to different categories of subscriptions. The streaming client has a specific means which guarantees that only authorized bit rates are used by the streaming client. The behavior of a streaming client is restricted to the range of bit rates mapped to its allocated quality level.

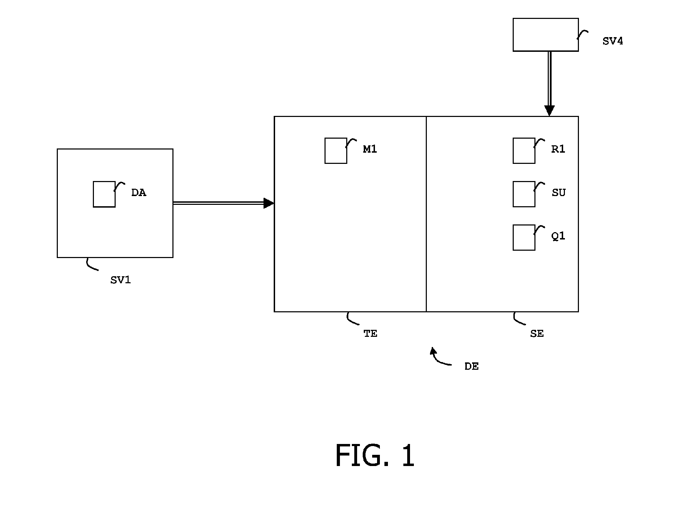

**Figure 1** shows an example of system comprising a server entity SV1, a subscription server SV4 and a client device DE according to the invention.

In this example, the server entity SV1 is made of three machines: an encoder machine, a streaming server and a cache server of CDN (Content Delivery Networks) type. The encoder machine is able to encode file contents in a plurality of bit rates. The streaming server is a streaming Web server able to provide media contents intended to be distributed in different bit rates. The cache server is able to provide a copy of the media content initially stored in streaming server.

Alternatively, the server entity SV1 may be any combination of the three machines. For instance, the server entity SV1 may combine capabilities of the encoder machine and the streaming server.

The server entity SV1 comprises the data DA to be sent to the device DE in streaming mode. For instance, the data D1 may be a video in MPEG-4 format and encoded in 8 distinct bit rates.

The subscription server SV4 is a server managing subscription to services of any kind of domain. In one embodiment, the subscribed service may be streaming service as such. In another embodiment, the subscribed service may be mainly a Telecom service and the streaming feature is subordinate feature of the Telecom subscription.

The subscription server SV4 manages several quality levels of streaming service. Each subscription has an allocated quality level. For instance, the subscription server SV4 may manage three quality levels: Premium, Regular and Low. Subscribers having the Premium level are intended to access streaming flow using a low compression rate and a high bit rate. Thus Premium users can get the best quality. Subscribers having the Regular level are intended to access streaming flow using a medium compression rate and a medium bit rate. Subscribers having the Low level are intended to access streaming flow using a high compression rate and a low bit rate. Thus Low users can only access the worst quality.

In this example, the client device DE comprises a host machine TE and a secure element SE connected to the host machine TE. The secure element SE may be a hardware secure token or a software secure token. The hardware secure token may be a smart card.

The secure element SE comprises data SU related to a subscription corresponding to a service manage by the subscription server SV4. Such a data SU typically comprises a unique subscription identifier allocated to the subscriber and a secret data allowing authentication. The secure element SE comprises a quality level Q1 associated to its subscription and provided by the subscription server SV4. The secure element SE comprises a bit rate range R1 associated to the quality level Q1. The secure element SE gets the quality level Q1 from the subscription server SV4, as a data linked to its subscription. Preferably, the quality level Q1 is sent to the client device DE through a message related to the subscription. Example of such message are those defined in 3GPP for MBMS security and called MSK (MBMS Service Key), or those defined in OMA (Open Mobile Alliance) for BCAST (Broadcast) and called LTKM (Long Term Key Message) or defined for the CAS (Conditional Access System) commonly used in DVB (Digital Video Broadcasting) systems and called EMM (Entitlement Management Message. The secure element SE gets the range R1 from the server entity SV1.

Alternatively, the range R1 may be stored in the host machine TE and the quality level Q1 remains stored in the secure element SE. In this case, the host machine TE is adapted to get the quality level Q1 from the secure element SE and to select an appropriate bit rate in the range R1 corresponding to the quality level Q1.

Assuming the encoder may provide streaming flow encoded at 48, 96, 300, 500, 800, 1200, 1800 and 2400 (expressed in Kbps), the range R1 may be defined as a set containing three values: 1200 Kbps, 1800 Kbps and 2400 Kbps.

Preferably, the bit rate range R1 is sent to the client device DE through a manifest file.

The host machine TE comprises a control means M1 adapted to select a bit rate only in the range R1 for retrieving a data via the streaming mechanism. The control means M1 forbids use of bit rates which do not comply with the associated range R1. In other words, the client device DE may retrieve the segments of a streaming flow using different bit rates comprised in its associated range.

For example, the client device DE may comply with the MPEG-DASH (Dynamic Adaptive Streaming over HTTP) defined in ISO/IEC 23009-1 standard. In this case, the host machine TE comprises a DASH control engine that may include the control means M1. The streaming server provides a specific type of manifest file called Media Presentation Description (MPD). The mapping between the bit rates ranges and the quality levels may be conveyed in the MPD through a metadata field. The streaming flow may comply with MP3, MP4 or MPEG2TS format for instance. The manifest file may be coded in XML (eXtensible Markup Language).

In another embodiment, the specific features of the secure element SE can be integrated in the host machine TE.

In another embodiment, the control means M1 can be integrated in the secure element SE.

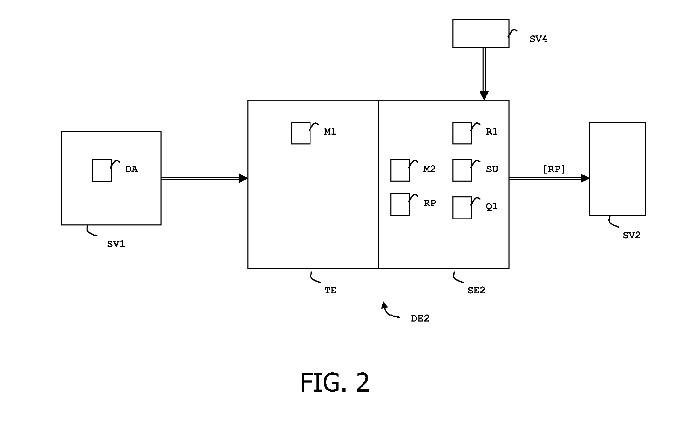

**Figure 2** shows another example of system comprising a server entity SV1, a subscription server SV4, a monitoring server SV2 and a client device DE2 according to the invention.

In this example, the server entity SV1 and the subscription server SV4 are similar to those described at Figure 1. The client device DE2 is similar to client device DE described at Figure 1 with the following differences. The client device DE2 comprises a reporting means M2 which is configured to build a report RP that reflects the bit rates used for getting data through the streaming mechanism. For example, the report RP may be the list of used bit rates. Advantageously, the reporting means M2 can sign and cipher the generated report RP using a cryptographic function.

The report RP may be generated using an identifier of the user who owns the subscription or an identifier of the subscription itself.

The client device DE2 is configured to send the report RP to the monitoring server SV2. A secure session may be established between client device DE2 and monitoring server SV2 if needed. The monitoring server SV2 can check that used bit rates comply with the quality level associated with the subscription linked to the client device DE2. Thus the report RP provides a proof of the effective quality of the adaptive streaming flow. For example the report RP may be protected by a security scheme such as the Advanced Encryption Standard also named AES.

The monitoring server SV2 can connect the subscription server SV4 in order to get the subscription elements required for completing its checking operations. Similarly, the monitoring server SV2 can connect the server entity SV1 to retrieve the information needed for completing its checking operations. For instance the monitoring server SV2 may need the history of ranges dynamically assigned to each quality level.

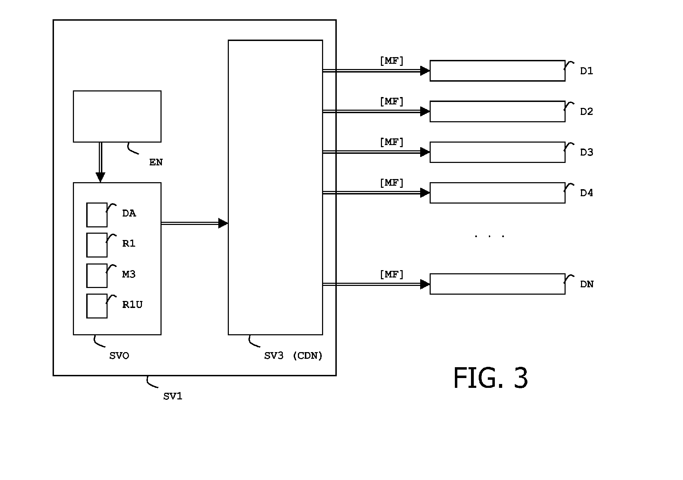

**Figure 3** shows another example of a system comprising a plurality of client devices and a server entity SV1 including a streaming server SV0 and cache server SV3 and according to the invention.

The client devices D1, D2, ..., DN are similar to the client device DE of Figure 1.

In this example, the server entity SV1 is similar to the server entity described at Figure 1. The server entity SV1 comprises three elements: an encoder machine EN, a streaming server SV0 and a cache server SV3 of CDN (Content Delivery Networks) type.

The streaming server SV0 is able to generate a manifest file MF which comprises the mapping between ranges of bit rates and quality levels. The cache server SV3 sends the same manifest file MF to the plurality of client devices D1, D2, ... DN.

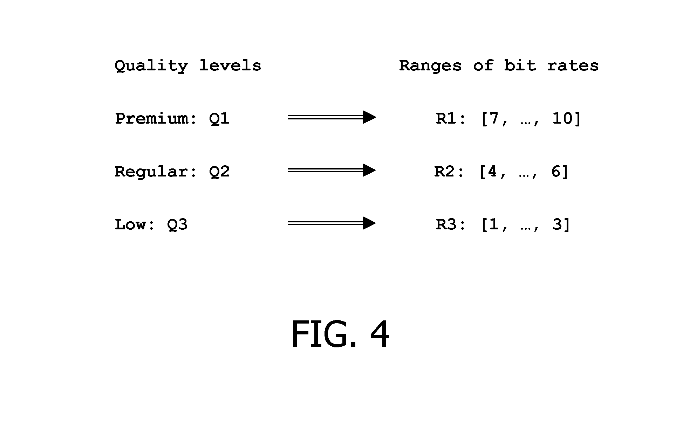

An example of mapping between ranges of bit rates and quality levels is provided at Figure 4.

Advantageously, the streaming server SV0 may comprise a generator means M3 configured to dynamically generate an updated range of bit rates for each of the quality levels by taking into account the load of the server entity SV1. For example the generator means M3 can generate an updated range R1U for the quality level Q1 and allocate the updated range R1U to the quality level Q1. The server entity SV1 may send the updated ranges to the plurality of client devices D1, D2, ..., DN in a further manifest file.

When assessing the load of the server entity SV1, the generator means M3 may take into account the number of streaming clients simultaneously connected to the server entity SV1. Advantageously, the generator means M3 may take into account the number of streaming clients in each quality level that communicate with the server entity SV1 at the same time or during a preset duration. Thus the streaming server may adapt the set of range according to the actual activity of users in each quality level.

The generator means M3 may also take into account the actual activity of the server entity versus a preset threshold, independently of the type of tasks handled by the server entity SV1.

Alternatively, the generator means M3 may take into account the network status provided by a monitoring machine in charge of spying the flow of network traffic and the incidents.

Advantageously, the client device may be configured to periodically compare the actually used bit rates versus a preset threshold value in order to detect an important fall of the used bit rates. For instance, the client device may check if the average of the used bit rates is lower than a predefined threshold value. If the average of actual bit rates is lower than the threshold, the secure element may send a message to the DASH control engine for requesting an increase of the bit rate used for getting the next streaming segments. Such a feedback mechanism allows guaranteeing that the Quality of Service is maintained to an acceptable level and allows handling unexpected and sudden load peak.

The predefined threshold value may be initially provided by the subscription server and stored in the secure element.

In another example, the server entity SV1 may include several cache servers. In this case, a manifest file may be generated by the streaming server and distributed by the plurality of cache servers. Alternatively, distinct manifest files may be directly generated into each cache server.

**Figure 4** shows an example of mapping between quality level and range of bit rates according to the invention.

In this example, the subscription server SV4 and the server entity SV1 manage three quality levels: Q1 (Premium), Q2 (Regular) and Q3 (Low).

The encoder EN is assumed to be able to generate streaming flows in ten different formats which are numbered 1 to 10. The format n°1 is encoded with the lowest bit rate and the format n°10 is encoded with the highest bit rate.

The range R1 corresponds to the formats n°7, n°8, n°9 and n°10. The range R2 corresponds to the formats n°4, n°5, and n°6. The range R3 corresponds to the formats n°1, n°2 and n°3.

According to the example of Figure 4, the range R1 is allocated to the quality level Q1, the range R2 is allocated to the quality level Q2 and the range R3 is allocated to the quality level Q3. Thus a client device having a subscription linked to the quality level Q2 can use only three formats. (I.e. only three bit rates.)

In this example, the ranges are separate. Alternatively, the ranges may overlap.

An advantage of the invention is to allow a flexible and dynamic setting of usable bit rates which is compatible with massive scale.

The invention is consistent with the current web streaming standards. The invention may be used for streaming content transmitted in clear or ciphered mode.

Public networks like Internet are becoming un-managed networks which are not under the control of a unambiguous authority. Thanks to the invention, the subscription providers and service providers may control the QoS of a specific set of users even in using streaming over public networks.

The invention is not limited to three quality levels.

## Claims

1. A **method** for providing a device (DE) with a data (DA) through an adaptive streaming flow, said data (DA) being made available by a server entity (SV1) in a plurality of bit rates, the device (DE) comprising a subscription (SU) allowing access to said data (DA),
**characterized in that** said method comprises the following steps:
a) sending a quality level (Q1) from a subscription server (SV4) to the device (DE) through a message related to said subscription (SU),
b) providing the device (DE) with a range (R1) of bit rates reserved for said quality level (Q1), the range (R1) being a subset of said plurality of bit rates,
c) authorizing the device (DE) to use a selection of bit rates comprised only in the range (R1) for receiving the data (DA).

2. A method according to claim 1, wherein said server entity (SV1) allocates said range (R1) to said quality level (Q1).

3. A method according to claim 1, wherein an updated range (R1U) of bit rates is dynamically generated by taking into account the load of the server entity (SV1), wherein said updated range (R1U) is allocated to said quality level (Q1) and wherein the updated range (R1U) is sent to the device (DE).

4. A method according to claim 1, wherein the subscription server (SV4) manages a plurality of quality levels (Q1, Q2, Q3) and wherein the device (DE) receives a manifest file (MF) which comprises said plurality of quality levels (Q1, Q2, Q3) and a plurality of ranges (R1, R2, R3) uniquely allocated to a each of said quality levels (Q1, Q2, Q3).

5. A method according to claim 1, wherein the device (DE) generates a report (RP) reflecting said selection of bit rates and wherein said report (RP) is sent to a monitoring server (SV2) as a proof of effective quality of the adaptive streaming flow.

6. A method according to claim 5, wherein the device (DE) comprises a user equipment (TE) and a secure element (SE), wherein said subscription (SU) is allocated to a user, wherein the secure element (SE) generates a signature of the report (RP) using a cryptographic function and an identifier of said user and wherein said signature is sent to the monitoring server (SV2).

7. A **device** (DE) intended to receive a data (DA) through an adaptive streaming flow, said data (DA) being provided by a server entity (SV1) in a plurality of bit rates, said device (DE) comprising a subscription (SU) allowing access to said data (DA),
**characterized in that** said device (DE) is configured to receive and to store a quality level (Q1) provided by a subscription server (SV4) through a message related to said subscription (SU), **in that** said device (DE) is configured to receive and to store a range (R1) of bit rates reserved for said quality level (Q1), the bit rate range (R1) being a subset of said plurality of bit rates and **in that** said device (DE) comprises a control means (M1) configured to use only a selection of bit rates comprised in the range (R1) to receive the data (DA).

8. A device according to claim 7, wherein the device (DE) comprises a reporting means (M2) configured to generate a report (RP) reflecting said selection of bit rates, said report (RP) being a proof of effective quality of the adaptive streaming flow.

9. A system comprising the device of claim 8 and a monitoring server (SV2) which is configured to retrieve, to authenticate and to analyze said report (RP), wherein said subscription (SU) is allocated to a user, wherein said reporting means (M2) is adapted to generate a signature of the report (RP) using a cryptographic function and an identifier of said user and wherein said reporting means (M2) is able to securely send the report (RP) to said monitoring server (SV2).

10. A system comprising the device of claim 7, wherein the server entity (SV1) is configured to dynamically generate an updated range (R1U) of bit rates by taking into account the load of the streaming entity (SV1), wherein said server entity (SV1) is configured to allocate said updated range (R1U) to said quality level (Q1) and to send the updated range (R1U) to the device (DE).
